# EUROPÄISCHE PATENTSCHRIFT

(11) **EP 1 548 992 B1**
(45) Veröffentlichungstag und Bekanntmachung des Hinweises auf die Patenterteilung: **18.10.2006**
(21) Anmeldenummer: 04030281.2
(22) Anmeldetag: 21.12.2004
(51) Int. Cl.: H04L 12/40, H04L 12/413, B64C 13/24

(54) **System zur Aufrechterhaltung einer fehlerfreien Kommunikation in einem Datenbus**
System for maintaining error-free communication in a data bus
Systéme pour maintenir la communication sans erreur dans un bus de données

(30) Priorität: 23.12.2003 DE 10360873
(43) Veröffentlichungstag der Anmeldung: 29.06.2005
(73) Patentinhaber: Airbus Deutschland GmbH, 21129 Hamburg (DE)
(72) Erfinder: Rieckmann, Norbert, 22549 Hamburg (DE)
(74) Vertreter: Maiwald Patentanwalts GmbH

(56) Entgegenhaltungen:
- EP-A2- 0 237 839
- EP-A2- 1 170 903
- WO-A1-02/088972

## Beschreibung

Die vorliegende Erfindung betrifft Datenbusse im Allgemeinen. Insbesondere betrifft die vorliegende Erfindung ein Verfahren zum Betreiben eines Terminals, das über eine Busleitung Daten empfängt und versendet, ein Terminal zum Anschluss an eine Busleitung und ein Datenbussystem mit einer Busleitung und einem Terminal.

In Anwendungen, wie in der Automobilindustrie oder im Flugzeugbau werden heute zunehmend Bussysteme statt komplizierter Kabelbaumsysteme verwendet. Dies ermöglicht eine einfachere Wartbarkeit des Systems als auch geringeren Verkabelungsaufwand und ein geringes Gewicht. Diesbezüglich gab es insbesondere in der Automobilindustrie eine Übereinkunft hinsichtlich eines gemeinsamen Busstandards, nämlich des CAN-Bussystems nach DIN ISO 11898. Im Flugzeugbau gibt es beispielsweise den ARINC 629-Standard und den MIL-SDT 1553-Standard. Insbesondere bei der Anwendung im Flugzeugbau ist es erforderlich, dass das Bussystem robust gegen Fehler ist. Im Mittelpunkt dabei steht die Vermeidung eines Zusammenbruchs der Kommunikation durch die Fehlfunktion eines einzigen Steuergerätes oder Terminals.

In diesen Datenbussystemen kann es tatsächlich passieren, dass ein defektes Gerät oder Terminal den ganzen Bus stört. Ein typisches Beispiel hierfür ist der sogenannte "Babbling Idiot", also ein Gerät oder Terminal, das kontinuierlich sinnlose Informationen auf den Bus schreibt. Im Extremfall führt dies dazu, dass keinerlei Kommunikation zwischen den anderen Geräten/Terminals, die an der gleichen Busleitung angeschlossen sind, mehr möglich ist.

Dies kann bisher nur unzureichend durch äußere Maßnahmen verhindert oder abgestellt werden, indem die einzelnen Sender durch externe Mittel überwacht werden, und beim Auftreten eines "Babbling Idiot" von außen ausgeschaltet werden. Dies bedeutet erhöhten Aufwand an Verknüpfungen und zudem erhöhte Kosten.

Aus der EP 0 237 839 A2 ist ein Kommunikationsssystem zur Übertragung von Datennachrichten über einen Datenbus zwischen zwei oder mehreren Benutzer-Mikroprozessoren, die an einen Datenbus angebunden sind, bekannt.

Die EP 1 170 903 A2 offenbart eine Buswächter-Einheit für einen Netzknoten eines zeitgetriggerten Datenkommunikationsnetzes.

Die WO 02/088972 offenbart ein System zur Unterhaltung einer sauberen Terminierung und fehlerfreien Kommunikation in einem Netzwerkbus mit mit einem Leistungsbus, umfassend zumindest ein Netzwerkgerät, einen Netzwerk-Controller und zumindest ein Bus-Schutzelement.

Es ist eine Aufgabe der vorliegenden Erfindung, ein Blockieren eines Bussystems durch einen "Babbling Idiot" zu vermeiden.

Gemäß einem Ausführungsbeispiel der vorliegenden Erfindung, wie in Anspruch 1 angegeben, wird ein Verfahren zum Betreiben eines Terminals zur Verfügung gestellt, das über eine Busleitung Daten empfängt und sendet. Es wird die Busleitung überwacht zur Bestimmung, ob die Busleitung besetzt ist, d.h. ob Daten über die Busleitung transportiert werden. Es wird auch bestimmt, ob das entsprechende Terminal gerade Daten an die Busleitung sendet. Gemäß des Verfahrens wird die Datensendung des Terminals an die Busleitung mittels Abschalten des Terminals unterbunden, wenn bestimmt wird, dass das Terminal Daten an die Busleitung sendet und die Busleitung besetzt ist. Das Terminal wird an zumindest einem Bussystem ausgewählt aus der Gruppe von einem CAN-Bussystem, einem ARINC 629-Bussystem und einem MIL-SDT 1553-Bussystem betrieben.

In anderen Worten wird gemäß dieses Ausführungsbeispiels der vorliegenden Erfindung eine Datensendung des Terminals an die Busleitung unterbunden oder das Terminal blockiert oder ausgeschaltet, wenn das Terminal sendet, obwohl der Bus nicht frei ist.

Vorteilhaft erlaubt dies ein Ausschalten oder ein Unterbinden der Datensendung eines Terminals, wenn dieses sich als "Babbling Idiot" herausstellt, d.h. wenn dieses Daten an die Busleitung sendet, obwohl die Busleitung besetzt ist.

Gemäß einem weiteren Ausführungsbeispiel der vorliegenden Erfindung wird ein Terminal zum Anschluss an eine Busleitung angegeben, um über die Busleitung Daten zu empfangen und zu senden. Das Terminal umfasst eine Überwachungsschaltung zum Überwachen der Busleitung zur Bestimmung ob die Busleitung besetzt ist. Ferner umfasst das Terminal eine Sendebestimmungsschaltung zum Bestimmen, ob das Terminal Daten an die Busleitung sendet sowie eine Sendeunterbindungsschaltung zum Unterbinden der Datensendung an die Busleitung mittels Abschalten des Terminals, wenn bestimmt wird, dass das Terminal Daten an die Busleitung sendet, obwohl die Busleitung besetzt ist. Das Terminal wird an zumindest einem Bussystem ausgewählt aus der Gruppe von einem CAN-Bussystem, einem ARINC 629-Bussystem und einem MIL-SDT 1553-Bussystem betrieben.

In vorteilhafter Art und Weise wird gemäß dieses Ausführungsbeispiels der vorliegenden Erfindung ein Terminal angegeben, das vollkommen ohne externe Überwachung, d.h. von sich selbst eine Datensendung an die Busleitung unterbricht, sobald festgestellt wird, dass solch eine Datensendung unberechtigt ist. Somit wird ein fehlerhaftes Verhalten des Senders oder des Terminals mit höherer Sicherheit als im Stand der Technik bekannt, innerhalb des Terminals erkannt und unterbunden.

Gemäß einem weiteren Ausführungsbeispiel der vorliegenden Erfindung wird ein Datenbussystem angegeben, mit einer Busleitung und einem Terminal. In diesem Datenbussystem ist das Terminal mit einer Überwachungsschaltung, einer Sendebestimmungsschaltung und einer Sendeunterbindungsschaltung derart ausgestaltet, dass Sende- und Empfangsleitungen des Terminals überwacht werden und sobald eine unberechtigte Sendung durch das Terminal oder eines Senders des Terminals erfasst wird, die Sendung der Daten mittels Abschalten des Terminals unterbunden wird. Eine unberechtigte Sendung wird beispielsweise dadurch festgestellt, dass der Sender oder das Terminal versucht, Daten auf die Datenleitung zu legen, obwohl diese nicht frei ist oder besetzt ist. Das Terminal wird an zumindest einem Bussystem ausgewählt aus der Gruppe von einem CAN-Bussystem, einem ARINC 629-Bussystem und einem MIL-SDT 1553-Bussystem betrieben.

Es kann als ein Kern eines Ausführungsbeispiels der vorliegenden Erfindung betrachtet werden, dass beide, d.h. die Sende- und Empfangsleitung des Terminals überwacht werden und wenn eine unberechtigte Sendung auf der Sendeleitung bestimmt wird, d.h. wenn der Sender sendet, obwohl der Bus nicht frei ist, wird bestimmt, dass ein Fehler vorliegt und der Sender wird ausgeschaltet.

Weitere vorteilhafte Ausführungsbeispiele der vorliegenden Erfindung ergeben sich aus den Unteransprüchen.

Im Folgenden werden Ausführungsbeispiele der vorliegenden Erfindung unter Bezugnahme auf die begleitenden Figuren beschrieben.
- Fig. 1: zeigt ein Flussdiagramm eines Ausführungsbeispiels eines Verfahrens zum Betreiben eines Terminals in einem Bussystem gemäß der vorliegenden Erfindung;
- Fig. 2: zeigt ein vereinfachtes Blockschaltbild eines ersten Ausführungsbeispiels eines Datenbussystems mit einem ersten Ausführungsbeispiel eines Terminals gemäß der vorliegenden Erfindung;
- Fig. 3: zeigt ein vereinfachtes Blockschaltbild eines zweiten Ausführungsbeispiels eines Datenbussystems mit einem zweiten Ausführungsbeispiel eines Terminals gemäß der vorliegenden Erfindung.

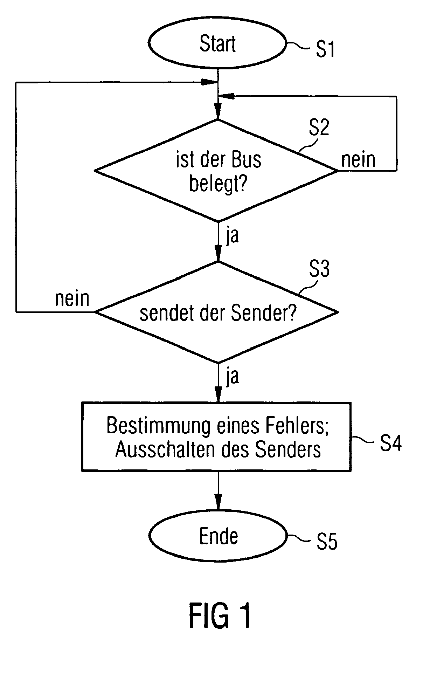

Fig. 1 zeigt ein vereinfachtes Flussdiagramm eines Ausführungsbeispiels eines Verfahrens zum Betreiben eines Terminals, das über eine Busleitung Daten empfängt und sendet.

Wie Fig. 1 zu entnehmen ist, wird nach dem Start in Schritt S1 im Schritt S2 bestimmt, ob der Bus, d.h. die Busleitung belegt ist oder nicht. Wird in Schritt S2 bestimmt, dass die Busleitung belegt ist, geht der Betrieb weiter zu Schritt S3, in dem bestimmt wird, ob der Sender des Terminals sendet oder nicht. Wird in Schritt S3 bestimmt, dass der Sender sendet, geht der Betrieb weiter zu Schritt S4, in dem dann das Vorliegen eines Fehlers bestimmt wird und der Sender ausgeschaltet wird. Von Schritt S4 geht der Betrieb weiter zu Schritt S5, wo der Betrieb endet.

Wird in Schritt S2 bestimmt, dass der Bus nicht belegt ist, geht das Verfahren rekursiv zurück. Wird in Schritt S3 bestimmt, dass der Sender nicht sendet, geht der Betrieb rekursiv zurück zu Schritt S2.

Das in Fig. 1 dargestellte Verfahren kann beispielsweise derart ausgeführt werden, dass eine Sendeleitung und eine Empfangsleitung von und zu einem an einer Busleitung angeschlossenen Terminal überwacht werden und eine Datensendung des Terminals unterbrochen wird, wenn festgestellt wird, dass sowohl auf der Eingangsleitung als auch auf der Sendeleitung ein Datenverkehr ist. Ein ungleicher Datenverkehr auf der Eingangsleitung und auf der Sendeleitung bedeutet, dass sich die Daten auf der Sendeleitung von den Daten auf der Empfangsleitung unterscheiden.

In vorteilhafter Art und Weise werden die in Fig. 1 gezeigten Verfahrensschritte in dem entsprechenden Terminal, das an der Busleitung angeschlossen ist, ausgeführt. Auf diese Art und Weise ist keine externe Überwachung erforderlich. Dies ermöglicht auch eine große Flexibilität des Bussystems, da beispielsweise bei Hinzufügen neuer Terminals keine externe Steuerung oder Koordination angepasst werden muss. Überdies erhöht dies die Fehlerrobustheit des Bussystems.

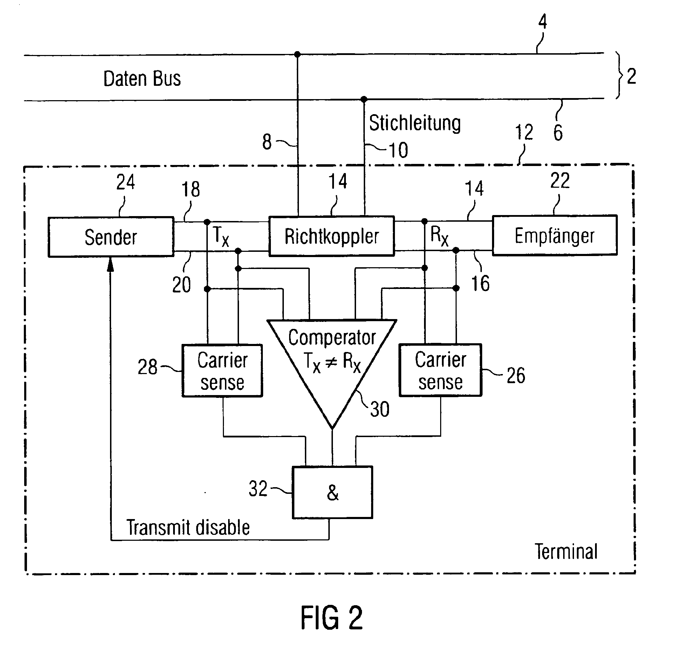

Fig. 2 zeigt ein vereinfachtes Blockschaltbild eines ersten Ausführungsbeispiels eines Datenbussystems mit einem ersten Ausführungsbeispiel eines Terminals gemäß der vorliegenden Erfindung.

Wie Fig. 2 zu entnehmen ist, weist das Bussystem einen Datenbus 2 mit zwei Datenleitungen 4 und 6 auf, die jeweils über entsprechende Stichleitungen 8 und 10 mit dem Terminal 12 verbunden sind. Insbesondere sind die Datenleitungen 4 und 6 über die Stichleitungen 8 und 10 mit einem Richtkoppler 14 in dem Terminal 12 verbunden. Neben dem Richtkoppler 14 umfasst das Terminal 12 einen Empfänger 22, einen Sender 24, zwei Carrier-Sense-Schaltungen 26 und 28, einen Komperator 30 sowie ein UND-Gatter 32 auf, dessen Ausgang als "Transmit disable" mit dem Sender verbunden ist.

Der Richtkoppler 14 ist über Sendeleitungen T_{X} 18 und 20 mit dem Sender 24 verbunden. Ferner ist der Richtkoppler 14 über Empfangsleitungen Rₓ 14 und 16 mit dem Empfänger 22 verbunden. Die Empfangsleitungen R_{X} 14 und 16 sind ebenfalls Eingangssignale für die Carrier-Sense-Schaltung 26 und den Komperator 30. Die Sendeleitungen Tₓ 18 und 20 sind ebenfalls Eingangssignale für die Carrier-Sense-Schaltung 28 und den Komperator 30. Die Ausgänge der Carrier-Sense-Schaltungen 26 und 28 sowie des Komperators 30 bilden die Eingänge des UND-Gatters 32.

Die Funktionsweise der in Fig. 2 dargestellten Schaltung des Terminals ist wie folgt: Wenn ein Signal auf dem Datenbus 2 vorhanden ist, wird es durch den Richtkoppler 14 auf die Sendeleitungen Tₓ und die Empfangsleitungen Rₓ verteilt. T_{X}und R_{X} werden durch Signalmessung durch die Carrier-Sense-Schaltungen 26 und 28 überwacht. Die Carrier-Sense-Schaltungen 26 und 28 erzeugen ein Ausgangssignal, wenn eine Signalspannung entsprechend auf T_{X} oder R_{X} vorhanden ist. Gleichzeitig wird der Signalinhalt von T_{X} und R_{X} mittels des Komperators 30 verglichen. Der Komperator 30 erzeugt nur dann ein Ausgangssignal, wenn die Inhalte der Eingangssignale, d.h. von T_{X} und R_{X} ungleich sind.

Wenn der Sender 24 während einer Übertragung auf den Datenbus 2 willkürlich eine Datenübertragung über den Datenbus 2 startet, sind folgende Bedingungen erfüllt:
1. Auf der T_{X}-Leitung wird ein Signal detektiert, wodurch die Carrier-Sense-Schaltung 28 ein Ausgangssignal erzeugt.
2. Auf der R_{X}-Schaltung wird ein Signal detektiert, worauf die Carrier-Sense-Schaltung 26 ein Ausgangssignal erzeugt.
3. Der Komperator detektiert, dass das Sendesignal (auf T_{X}; d.h. auf den Leitungen 18 und 20) ungleich dem Empfangssignal (R_{X}, d.h. auf den Leitungen 14 und 16) ist und erzeugt daraufhin ein Ausgangssignal.

Diese drei Bedingungen 1 bis 3 werden nun über das UND-Gatter verknüpft, welches dann über "Transmit disable" den Sender abschaltet. Auf diese Art und Weise wird innerhalb des Terminals 12 eine Logik zur Verfügung gestellt, die ein unberechtigtes Senden des Senders 24 unterdrückt bzw. unterbindet. Auf diese Art und Weise wird verhindert, dass sich das Terminal 12 zu einem "Babbling Idiot" entwickelt.

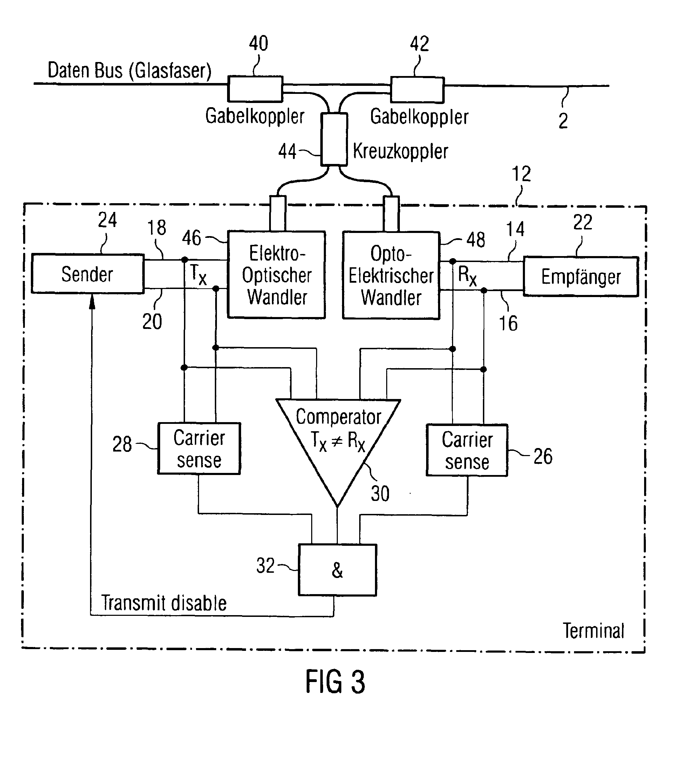

Fig. 3 zeigt ein vereinfachtes Blockschaltbild eines zweiten Ausführungsbeispiels eines Datenbussystems mit einem zweiten Ausführungsbeispiel eines Terminals gemäß der vorliegenden Erfindung. In Fig. 3 werden für gleiche oder sich entsprechende Elemente die gleichen Bezugsziffern wie in Fig. 2 verwendet.

Der Datenbus 2 in Fig. 3 ist eine Glasfaser. Dementsprechend ist das in Fig. 3 dargestellte Datenübertragungssystem ein optisches Datenübertragungssystem. Da die Elemente 14, 16, 18, 20, 22, 24, 26, 28, 30 und 32 schon mit Verweis auf Fig. 2 beschrieben worden ist, wird auf eine entsprechende Beschreibung diesbezüglich auf Fig. 2 verwiesen. Die Funktionsweise dieser Elemente in dem in Fig. 3 dargestellten Ausführungsbeispiel entspricht der Funktionsweise dieser Elemente in dem Ausführungsbeispiel, das in Fig. 2 dargestellt ist.

Im Unterschied zu Fig. 3 werden die optischen Signale von dem Datenbus 2 mittels Gabelkoppler 40 und 42 aus der Glasfaser ausgekoppelt und über einen Kreuzkoppler 44 an einen senderseitigen elektrooptischen Wandler 46 und einen empfangsseitigen optoelektrischen Wandler 48 weitergegeben. Die elektrooptischen Wandler 46 und 48 wandeln die von dem Terminal eingehenden bzw. ausgehenden elektrischen Signale in optische Signale um, die dann über Kreuzkoppler 44 und Gabelkoppler 40 und 42 in die Glasfaser eingekoppelt werden. Ebenfalls wandeln die elektrooptischen Wandler 46 und 48 die optischen Signale, die durch Gabelkoppler 40 und 42 und Kreuzkoppler 44 aus der Glasfaser ausgekoppelt werden in die elektrischen Signale um, die das Sendesignal Tₓ auf den Leitungen 18 und 20 bilden und das Empfangssignal der R_{X} auf den Leitungen 14 und 16.

Wie zuvor schon angesprochen, wird gemäß der vorliegenden Erfindung ein fehlerhaftes Verhalten des Senders mit sehr hoher Sicherheit innerhalb des Terminals erkannt und auch unterbunden. Auf diese Art und Weise ist es nicht erforderlich, eine externe Steuerung oder Überwachung vorzusehen, die beispielsweise einem zu einem "Babbling Idiot" mutierenden Sender ausschaltet. Auf diese Art und Weise wird eine Netzwerkblockierung vermieden.

## Patentansprüche

1. Verfahren zum Betreiben eines Terminals (12), das über eine Busleitung (4, 6) Daten empfängt und sendet, umfassend die Schritte:
Überwachen der Busleitung (4, 6) zur Bestimmung ob die Busleitung (4, 6) besetzt ist;
Bestimmen ob das Terminal (12) Daten an die Busleitung (4, 6) sendet; und
Unterbinden der Datensendung des Terminals (12) an die Busleitung mittels Abschalten des Terminals (12), wenn bestimmt wird, dass das Terminal (12) Daten an die Busleitung (4, 6) sendet und die Busleitung (4, 6) besetzt ist;
wobei das Terminal (12) das Unterbinden der Datensendung an die Busleitung (4, 6) von sich aus und frei von einer externen Überwachung durchführt;
wobei das Terminal (12) an zumindest einem Bussystem ausgewählt aus der Gruppe von einem CAN-Bussystem, einem ARINC 629-Bussystem und einem MIL-SDT 1553-Bussystem betrieben wird.

2. Verfahren nach Anspruch 1,
wobei eine Sendeleitung und eine Empfangsleitung zu und von dem Terminal (12) überwacht werden, und eine Datensendung des Terminal (12) unterbunden wird wenn festgestellt wird, dass sowohl auf der Empfangsleitung als auch auf der Sendeleitung ein unterschiedlicher Datenverkehr ist.

3. Verfahren nach einem der Ansprüche 1 oder 2,
wobei die Überwachung der Busleitung (4, 6) zur Bestimmung ob die Busleitung (4, 6) besetzt ist, die Bestimmung ob das Terminal (12) Daten an die Busleitung (4, 6) sendet und das Unterbinden der Datensendung innerhalb des Terminals (12) ausgeführt wird.

4. Verfahren nach einem der Ansprüche 1 bis 3, ferner umfassend die Schritte:
Einkoppeln eines Sendesignals von einer Sendeleitung des Terminals auf die Busleitung (4, 6) derart, dass das Sendesignal nicht an eine Empfangsleitung des Terminals weitergeleitet wird; und
Auskoppeln eines Signals von der Busleitung (4, 6) an das Terminal (12) derart, dass das Signal an die Sendeleitung und die Empfangsleitung des Terminal weitergegeben wird.

5. Verfahren nach einem der Ansprüche 1 bis 4,
wobei das Verfahren in einem elektrischen Datenbus (2) oder einem optischen Datenbus (2) in einem Flugzeug angewendet wird.

6. Terminal zum Anschluss an eine Busleitung, um über die Busleitung Daten zu empfangen und zu senden, umfassend:
eine Überwachungsschaltung (26) zum Überwachen der Busleitung (4, 6) zur Bestimmung ob die Busleitung (4, 6) besetzt ist;
eine Sendebestimmungsschaltung (28) zum Bestimmen ob das Terminal (12) Daten an die Busleitung (4, 6) sendet; und
eine Sendeunterbindungsschaltung (32) zum Unterbinden der Datensendung des Terminals (12) an die Busleitung mittels Abschalten des Terminals (12), wenn bestimmt wird, dass das Terminal (12) Daten an die Busleitung (4, 6) sendet und die Busleitung (4, 6) besetzt ist;
wobei die Sendeunterbindungsschaltung (32) derart eingerichtet ist, dass das Terminal (12) die Unterbindung der Datensendung an die Busleitung von sich aus und frei von einer externen Überwachung durchführt;
wobei das Terminal (12) an zumindest einem Bussystem ausgewählt aus der Gruppe von einem CAN-Bussystem, einem ARINC 629-Bussystem und einem MIL-SDT 1553-Bussystem betrieben wird.

7. Terminal nach Anspruch 6,
wobei eine Sendeleitung und eine Empfangsleitung zu und von dem Terminal (12) mittels der Überwachungsschaltung (26) und der Sendebestimmungsschaltung (28) überwacht werden, und eine Datensendung des Terminal (12) mittels der Sendeunterbindungsschaltung (32) unterbunden wird wenn festgestellt wird, dass sowohl auf der Empfangsleitung als auch auf der Sendeleitung ein nicht identischer Datenverkehr ist.

8. Terminal nach einem der Ansprüche 6 oder 7,
wobei die Überwachung der Busleitung (4, 6) zur Bestimmung ob die Busleitung (4, 6) besetzt ist, die Bestimmung ob das Terminal (12) Daten an die Busleitung (4, 6) sendet und das Unterbinden der Datensendung innerhalb des Terminals (12) ausgeführt wird, wobei die Überwachungsschaltung (26), die Sendebestimmungsschaltung (28) und die Sendeunterbindungsschaltung (32) in dem Terminal (12) angeordnet sind.

9. Terminal nach einem der Ansprüche 6 bis 8,
wobei das Terminal (12) mittels eines Kopplers (14, 44) mit der Busleitung (4, 6) verbunden ist, wobei der Koppler (14, 44) ein Sendesignal von einer Sendeleitung des Terminals an die Busleitung (4, 6) weiterleitet ohne es an eine Empfangsleitung des Terminals weiterzuleiten und wobei der Koppler (14, 44) ein Signal von der Busleitung (4, 6) an die Empfangsleitung und die Sendeleitung des Terminal weitergibt.

10. Terminal nach einem der Ansprüche 6 bis 9,
wobei das Terminal an einen elektrischen Datenbus (2) oder einen optischen Datenbus (2) in einem Flugzeug anschließbar ist.

11. Datenbussystem mit einer Busleitung (4, 6) und einem Terminal (12), das mit der Busleitung (4, 6) verbunden ist, um über die Busleitung (4, 6) Daten zu empfangen und zu senden, wobei das Terminal (12) umfasst:
eine Überwachungsschaltung (26) zum Überwachen der Busleitung (4, 6) zur Bestimmung ob die Busleitung (4, 6) besetzt ist;
eine Sendebestimmungsschaltung (28) zum Bestimmen ob das Terminal (12) Daten an die Busleitung (4, 6) sendet;
eine Sendeunterbindungsschaltung (32) zum Unterbinden der Datensendung an die Busleitung (4, 6) wenn bestimmt wird, dass das Terminal Daten an die Busleitung (4, 6) sendet und die Busleitung (4, 6) besetzt ist;
wobei die Sendeunterbindungsschaltung (32) derart eingerichtet ist, dass das Terminal (12) die Unterbindung der Datensendung an die Busleitung (4, 6) mittels Abschalten des Terminals (12) von sich aus und frei von einer externen Überwachung durchführt;
wobei das Terminal (12) an zumindest einem Bussystem ausgewählt aus der Gruppe von einem CAN-Bussystem, einem ARINC 629-Bussystem und einem MIL-SDT 1553-Bussystem betrieben wird.

12. Datenbussystem nach Anspruch 11,
wobei eine Sendeleitung und eine Empfangsleitung zu und von dem Terminal (12) mittels der Überwachungsschaltung (26) und der Sendebestimmungsschaltung (28) überwacht werden, und eine Datensendung des Terminal (12) mittels der Sendeunterbindungsschaltung (32) unterbunden wird wenn festgestellt wird, dass sowohl auf der Empfangsleitung als auch auf der Sendeleitung ein unterschiedlicher Datenverkehr ist.

13. Datenbussystem nach einem der Ansprüche 11 oder 12,
wobei die Überwachung der Busleitung (4, 6) zur Bestimmung ob die Busleitung (4, 6) besetzt ist, die Bestimmung ob das Terminal (12) Daten an die Busleitung (4, 6) sendet und das Unterbinden der Datensendung innerhalb des Terminals (12) ausgeführt wird, wobei die Überwachungsschaltung (26), die Sendebestimmungsschaltung (28) und die Sendeunterbindungsschaltung (32) in dem Terminal angeordnet sind.

14. Datenbussystem nach einem der Ansprüche 11 bis 13,
wobei das Terminal (12) mittels eines Kopplers (14, 44) mit der Busleitung (4, 6) verbunden ist, wobei der Koppler (14, 44) ein Sendesignal von einer Sendeleitung des Terminals (12) an die Busleitung (4, 6) weiterleitet ohne es an eine Empfangsleitung des Terminals (12) weiterzuleiten und wobei der Koppler (14, 44) ein Signal von der Busleitung (4, 6) and das Terminal (12) an die Empfangsleitung und die Sendeleitung des Terminal weitergibt.

15. Datenbussystem nach einem der Ansprüche 11 bis 14,
wobei das Datenbussystem ein elektrischer Datenbus (2) oder ein optischer Datenbus (2) in einem Flugzeug ist.

## Claims

1. A method for operating a terminal (12) which receives and sends data via a bus line (4, 6), comprising the steps of:
monitoring the bus line (4, 6) to determine whether the bus line (4, 6) is busy;
determining whether the terminal (12) is sending data to the bus line (4, 6); and
preventing data transmission of the terminal (12) to the bus line (4, 6) by turning off the terminal (12) when it is determined that the terminal (12) is sending data to the bus line (4, 6) while the bus line is busy;
wherein the terminal (12) prevents data transmission to the bus line (4, 6) of its own accord and free of external supervision;
wherein the terminal (12) is operated on at least one bus system selected from the group of CAN-bus system, ARINC 629 bus system and MIL-SDT 1553 bus system.

2. The method of claim 1,
wherein a transmit line and a receive line to and from the terminal (12) are monitored, and data transmission of the terminal (12) is prevented if it has been determined that the data traffic is different on the receive line and on the transmit line.

3. The method of claim 1 or 2,
wherein monitoring the bus line (4, 6) to determine whether the bus line (4, 6) is busy, determining whether the terminal (12) is sending data to the bus line (4, 6), and preventing data transmission are all carried out within the terminal (12).

4. The method of one of the claims 1 to 3, further comprising the steps:
injecting a transmit signal from a transmit line of the terminal to the bus line (4, 6) such that the transmit signal is not forwarded to a receive line of the terminal; and
decoupling of a signal from the bus line (4, 6) to the terminal (12) such that the signal is forwarded to the transmit line and to the receive line of the terminal.

5. The method of one of the claims 1 to 4,
wherein the method is applied to either an electrical data bus (2) or an optical data bus (2) being used with an aircraft.

6. A terminal for connection to a bus line, for receiving and sending data via the bus line, comprising:
a monitoring circuit (26) for monitoring the bus line (4, 6) for determining whether the bus line (4, 6) is busy;
a transmission determination circuit (28) for determining whether the terminal (12) sends data to the bus line (4, 6); and
a transmission prevention circuit (32) to prevent data transmission of the terminal (12) to the bus line by turning off the terminal (12) when it is determined that the terminal (12) is sending data to the bus line (4, 6) while the bus line is busy;
wherein the transmission prevention circuit (32) is adapted such that the terminal (12) prevents data transmission to the bus line of its own accord and free of external supervision;
wherein the terminal (12) is operated on at least one bus system selected from the group of CAN-bus system, ARINC 629 bus system and MIL-SDT 1553 bus system.

7. The terminal of claim 6,
wherein a transmit line and a receive line to and from the terminal (12) are monitored by the monitoring circuit (26) and the transmission determination circuit (28), and data transmission of the terminal (12) is prevented by the transmission prevention circuit (32) if it is determined that data traffic is not identical on the receive line and on the transmit line.

8. The terminal of claim 6 or 7,
wherein monitoring the bus line (4, 6) to determine whether the bus line (4, 6) is busy, determining whether the terminal (12) is sending data to the bus line (4, 6), and
preventing data transmission are all carried out within the terminal (12),
wherein the monitoring circuit (26), the transmission determination circuit (28) and the transmission prevention circuit (32) are arranged in the terminal.

9. The terminal of one of the claims 6 to 8,
wherein the terminal (12) is connected to the bus line (4, 6) by a coupler (14, 44);
wherein the coupler (14, 44) forwards a transmit signal from a transmit line of the terminal to the bus line (4, 6) without forwarding it to a receive line of the terminal; and
wherein the coupler (14, 44) forwards a signal from the bus line (4, 6) to the receive line and to the transmit line of the terminal.

10. The terminal of one of the claims 6 to 9,
wherein the terminal is connectable to either an electrical data bus or an optical data bus being used with an aircraft.

11. A data bus system comprising a bus line (4, 6) and a terminal (12) which is connected to the bus line (4, 6) in order to receive and send data via the bus line (4, 6), the terminal (12) comprising:
a monitoring circuit (26) for monitoring the bus line (4, 6) for determining whether the bus line (4, 6) is busy;
a transmission determination circuit (28) for determining whether the terminal (12) is sending data to the bus line (4, 6);
a transmission prevention circuit (32) for preventing data transmission to the bus line (4, 6) when it is determined that the terminal (12) is sending data to the bus line (4, 6) while the bus line (4, 6) is busy;
wherein the transmission prevention circuit (32) is designed such that the terminal (12) prevents data transmission to the bus line (4, 6) of its own accord and free of external supervision by turning off the terminal (12);
wherein the terminal (12) is operated on at least one bus system selected from the group of CAN-bus system, ARINC 629 bus system and MIL-SDT 1553 bus system.

12. The data bus system of claim 11,
wherein a transmit line and a receive line to and from the terminal 812) are monitored by the monitoring circuit (26) and the transmission determination circuit (28); and
data transmission of the terminal (12) is prevented by the transmission prevention circuit (32) if it is determined that the data traffic is different on the receive line and on the transmit line.

13. The data bus system of claim 11 or 12,
wherein monitoring the bus line (4, 6) to determine whether the bus line (4, 6) is busy, determining whether the terminal (12) is sending data to the bus line (4, 6), and
preventing data transmission are all carried out within the terminal (12), wherein the monitoring circuit (26), the transmission determination circuit (28) and the transmission prevention circuit (32) are arranged in the terminal.

14. The data bus system of one of the claims 11 to 13,
wherein the terminal (12) is connected to the bus line (4, 6) by a coupler (14, 44);
wherein the coupler (14, 44) forwards a transmit signal from a transmit line of the terminal (12) to the bus line (4, 6) without forwarding it to a receive line of the terminal (12); and
wherein the coupler (14, 44) forwards a signal from the bus line (4, 6) to the receive line and to the transmit line of the terminal (12).

15. The data bus system of one of the claims 11 to 14,
wherein the data bus system is either an electrical data bus (2) or an optical data bus (2) within an aircraft.

## Revendications

1. Procédé d'exploitation d'un terminal (12), qui reçoit et émet des données à travers une ligne de bus (4, 6), comprenant les phases :
- surveillance de la ligne de bus (4, 6) pour déterminer si la ligne de bus (4, 6) est occupée ;
- détermination du fait de savoir si le terminal (12) émet des données à la ligne de bus (4, 6) ; et
- arrêt de l'émission de données du terminal (12) à la ligne de bus par déconnexion du terminal (12), lorsqu'il est déterminé que le terminal (12) émet des données à la ligne de bus (4, 6) et que la ligne de bus (4, 6) est occupée ;
- procédé dans lequel le terminal réalise de lui-même et sans une surveillance externe l'arrêt de l'émission de données à la ligne de bus (4, 6) ; et
- le terminal (12) est exploité sur au moins un système de bus sélectionné parmi le groupe d'un système de bus CAN, d'un système de bus ARINC 629 et d'un système de bus MIL-SDT 1553.

2. Procédé suivant la revendication 1, dans lequel sont surveillées une ligne d'émission et une ligne de réception menant au et du terminal (12), et une émission de données du terminal (12) est arrêtée lorsqu'il est établi qu'un trafic de données différent a lieu aussi bien sur la ligne de réception que sur la ligne d'émission.

3. Procédé suivant l'une des revendications 1 et 2, dans lequel sont réalisés la surveillance de la ligne de bus (4, 6) pour déterminer si la ligne de bus (4, 6) est occupée, la détermination du fait de savoir si le terminal (12) émet des données à la ligne de bus (4, 6), et l'arrêt de l'émission de données à l'intérieur du terminal (12).

4. Procédé suivant l'une des revendications 1 à 3, comprenant en outre les phases :
- couplage d'un signal émetteur d'une ligne d'émission du terminal sur la ligne de bus (4, 6) de telle sorte que le signal émetteur n'est pas transmis à une ligne de réception du terminal ; et
- découplage d'un signal de la ligne de bus (4, 6) au terminal (12) de telle sorte que le signal est transmis à la ligne d'émission et à la ligne de réception du terminal.

5. Procédé suivant l'une des revendications 1 à 4, le procédé étant appliqué dans un bus de données électrique (2) ou un bus de données optique (2) dans un avion.

6. Terminal pour le raccordement à une ligne de bus, pour recevoir et émettre des données à travers la ligne de bus, comprenant :
- un circuit de surveillance (26) de la ligne de bus (4, 6) pour déterminer si la ligne de bus (4, 6) est occupée ;
- un circuit de détermination d'émission (28) pour déterminer si le terminal (12) émet des données à la ligne de bus (4, 6) ; et
- un circuit d'arrêt d'émission (32) pour stopper l'émission de données du terminal (12) à la ligne de bus par déconnexion du terminal (12), lorsqu'il est déterminé que le terminal (12) émet des données à la ligne de bus (4, 6) et que la ligne de bus (4, 6) est occupée ;
- terminal dans lequel le circuit d'arrêt d'émission (32) est conçu de telle sorte que le terminal (12) réalise de lui-même et sans une surveillance externe l'arrêt de l'émission de données à la ligne de bus ; et
- le terminal (12) est exploité sur au moins un système de bus sélectionné parmi le groupe d'un système de bus CAN, d'un système de bus ARINC 629 et d'un système de bus MIL-SDT 1553.

7. Terminal suivant la revendication 6, dans lequel une ligne d'émission et une ligne de réception menant au et du terminal (12) sont surveillées au moyen du circuit de surveillance (26) et du circuit de détermination d'émission (28), et une émission de données du terminal (12) est arrêtée au moyen du circuit d'arrêt d'émission (32), lorsqu'il est établi qu'un trafic de données non identique a lieu aussi bien sur la ligne de réception que sur la ligne d'émission.

8. Terminal suivant l'une des revendications 6 et 7, dans lequel sont réalisés la surveillance de la ligne de bus (4, 6) pour déterminer si la ligne de bus (4, 6) est occupée, la détermination du fait de savoir si le terminal (12) émet des données à la ligne de bus (4, 6), et l'arrêt de l'émission de données à l'intérieur du terminal (12), le circuit de surveillance (26), le circuit de détermination d'émission (28) et le circuit d'arrêt d'émission (32) étant disposés dans le terminal (12).

9. Terminal suivant l'une des revendications 6 à 8, le terminal (12) étant relié au moyen d'un coupleur (14, 44) à la ligne de bus (4, 6), le coupleur (14, 44) transmettant un signal émetteur d'une ligne d'émission du terminal à la ligne de bus (4, 6) sans le transmettre à une ligne de réception du terminal, et le coupleur (14, 44) transmettant un signal de la ligne de bus (4, 6) à la ligne de réception et à la ligne d'émission du terminal.

10. Terminal suivant l'une des revendications 6 à 9, le terminal pouvant être raccordé à un bus de données électrique (2) ou un bus de données optique (2) dans un avion.

11. Système de bus de données avec une ligne de bus (4, 6) et un terminal (12) relié à la ligne de bus (4, 6) pour recevoir et émettre des données à travers la ligne de bus (4, 6), le terminal (12) comprenant :
- un circuit de surveillance (26) de la ligne de bus (4, 6) pour déterminer si la ligne de bus (4, 6) est occupée ;
- un circuit de détermination d'émission (28) pour déterminer si le terminal (12) émet des données à la ligne de bus (4, 6) ;
- un circuit d'arrêt d'émission (32) pour stopper l'émission de données à la ligne de bus (4, 6), lorsqu'il est déterminé que le terminal émet des données à la ligne de bus (4, 6) et que la ligne de bus (4, 6) est occupée ;
- système de bus dans lequel le circuit d'arrêt d'émission (32) est conçu de telle sorte que le terminal (12) réalise de lui-même et sans une surveillance externe l'arrêt de l'émission de données à la ligne de bus (4, 6) par déconnexion du terminal (12) ; et
- le terminal (12) est exploité sur au moins un système de bus sélectionné parmi le groupe d'un système de bus CAN, d'un système de bus ARINC 629 et d'un système de bus MIL-SDT 1553.

12. Système de bus de données suivant la revendication 11, dans lequel une ligne d'émission et une ligne de réception menant au et du terminal (12) sont surveillées au moyen du circuit de surveillance (26) et du circuit de détermination d'émission (28), et une émission de données du terminal (12) est arrêtée au moyen du circuit d'arrêt d'émission (32), lorsqu'il est établi qu'un trafic de données différent a lieu aussi bien sur la ligne de réception que sur la ligne d'émission.

13. Système de bus de données suivant l'une des revendications 11 et 12, dans lequel sont réalisés la surveillance de la ligne de bus (4, 6) pour déterminer si la ligne de bus (4, 6) est occupée, la détermination du fait de savoir si le terminal (12) émet des données à la ligne de bus (4, 6), et l'arrêt de l'émission de données à l'intérieur du terminal (12), le circuit de surveillance (26), le circuit de détermination d'émission (28) et le circuit d'arrêt d'émission (32) étant disposés dans le terminal.

14. Système de bus de données suivant l'une des revendications 11 à 13, le terminal (12) étant relié à la ligne de bus (4, 6) au moyen d'un coupleur (14, 44), le coupleur (14, 44) transmettant un signal émetteur d'une ligne d'émission du terminal (12) à la ligne de bus (4, 6) sans le transmettre à une ligne de réception du terminal (12), et le coupleur (14, 44) transmettant un signal de la ligne de bus (4, 6) à la ligne de réception et à la ligne d'émission du terminal (12).

15. Système de bus de données suivant l'une des revendications 11 à 14, le système de bus de données étant un bus de données électrique (2) ou un bus de données optique (2) dans un avion.
